# EUROPÄISCHE PATENTANMELDUNG

(11) **EP 3 772 842 A1**
(43) Veröffentlichungstag der Anmeldung: **10.02.2021**
(21) Anmeldenummer: 19190414.3
(22) Anmeldetag: 07.08.2019
(51) Int. Cl.: H04L 29/06, H04L 9/06, G05B 19/418

(54) **ERKENNUNG VON MANIPULIERTEN CLIENTS EINES LEITSYSTEMS**

(71) Anmelder: Siemens Aktiengesellschaft, 80333 München (DE)
(72) Erfinder: Lutz, Benjamin, 76327 Pfinztal (DE); Palmin, Anna, 76187 Karlsruhe (DE)

(57) **Zusammenfassung**

Vorgeschlagen wird eine Client-Server Architektur für ein Leitsystem (1) einer technischen Anlage,
wobei die Client-Server Architektur wenigstens ein als Client (4) ausgebildetes und vorgesehenes erstes Gerät und wenigstens ein als dem Client (4) zugeordneten Server (2, 3) ausgebildetes und vorgesehenes zweites Gerät umfasst,
und wobei der Client (4) dazu ausgebildet ist, Kontakt mit dem Server (2, 3) aufzunehmen, einen Code von dem Server (2, 3) zu empfangen und auszuführen, wobei mittels des Servers (2, 3) eine Kommunikation des Clients (4) zu dem Leitsystem (1) besteht,
und wobei der Server (2, 3) dazu ausgebildet ist, zu erkennen, ob der Code, den der Client (4) ausführt, mit dem Code übereinstimmt, den der Client (4) von dem Server (2, 3) empfangen hat,
wobei der Server (2, 3) dazu ausgebildet ist, für den Fall, dass der Code nicht übereinstimmt, eine Ausführung des Codes durch den Client (4) zu unterbrechen und den Client (4) von einer Kommunikation mit dem Leitsystem (1) auszuschließen.

## Beschreibung

Die Erfindung betrifft ein Verfahren zur Integritätsprüfung bei einer Client-Server Architektur eines Leitsystems einer technischen Anlage mit den Merkmalen des Anspruchs 1. Außerdem betrifft die Erfindung eine Client-Server Architektur für ein Leitsystem einer technischen Anlage mit den Merkmalen des Anspruchs 5. Außerdem betrifft die Erfindung eine Client-Server Architektur für ein Leitsystem einer technischen Anlage mit den Merkmalen des Anspruchs 6. Außerdem betrifft die Erfindung ein Leitsystem einer technischen Anlage gemäß Anspruch 8.

Weborientierte Operator Station Clients melden sich bei den Web Servern von Operator Station Servern an und laden von diesen den für die Bedienung und Beobachtung notwendigen Code (der in der Regel in Java Script und/oder HTML5 vorliegt), der clientseitig ausgeführt wird - z.B. Operating View, Meldefolgeanzeigen, Trendanzeigen, Alarm Banner, Navigationshierarchien.

Ist der Code in den Operator Station Client geladen, kann dieser dort auch manipuliert werden (z.B. durch einen Virus, eine Infiltration oder dergleichen), so dass beispielsweise Alarme im Operator Station Client nicht mehr visualisiert werden, Stell- und Prozesswerte falsche Werte anzeigen, usw. Deshalb ist es notwendig, den im Operator Station Client geladenen Code vor unbemerkten Manipulationen zu schützen.

Beispielsweise kann der Code entsprechend signiert werden, so dass eine Manipulation durch eine fehlgeschlagene Signaturvalidierung erkannt werden kann. Über die Erkennung hinaus ist es für den Betrieb einer verfahrenstechnischen Anlage existentiell wichtig, dass eine etwaige erkannte Manipulation unmittelbar sanktioniert und eine sofortige Rehabilitation in die Wege geleitet wird, so dass der Betrieb möglichst davon unberührt bleibt und die Bedienung und Beobachtung fortgeführt werden kann.

Aktuell wird der im Operator Station Client geladene Code in der Regel nicht oder lediglich durch sehr rudimentäre Mechanismen vor Manipulationen geschützt. Zudem gibt es keine Lösungen für eine sofortige Sanktionierung von etwaigen Manipulationen und eine nahtlos folgende Rehabilitation. Somit kann zum einen durch das Laden des unbemerkt manipulierten Codes Schaden angerichtet werden.

Zum anderen würde - falls man eine Manipulation erkennen würde - durch die Umsetzung der im IT-Bereich etablierten Empfehlung, im Falle einer erkannten Manipulation den manipulierten Code und somit den manipulierten Client abzulehnen, der Betrieb der betroffenen verfahrenstechnischen Anlage stark gefährdet und möglicherweise die Anlage gänzlich lahmgelegt.

Der Erfindung liegt die Aufgabe zugrunde, eine Client-Server Architektur für ein Leitsystem einer technischen Anlage sowie ein Verfahren anzugeben, das einen sichereren Betrieb der technischen Anlage ermöglicht und diese vor etwaigen Manipulationen effektiv schützt.

Ein erfindungsgemäßes Verfahren zur Integritätsprüfung bei einer Client-Server Architektur eines Leitsystems einer technischen Anlage, wobei die Client-Server Architektur wenigstens ein als Client ausgebildetes und vorgesehenes erstes Gerät und wenigstens ein als Server ausgebildetes und vorgesehenes zweites Gerät umfasst, weist die folgenden Verfahrensschritte auf:
a) Anmeldung des Clients bei dem Server und Herunterladen eines von dem Client auszuführenden Codes von dem Server;
b) Generieren eines Geheimschlüssels, Verschlüsseln des Geheimschlüssels unter Zuhilfenahme eines öffentlichen Schlüssels des Clients und Erstellung einer Signatur für den verschlüsselten Geheimschlüssel unter Zuhilfenahme eines öffentlichen Schlüssels des Servers durch den Server;
c) Übertragen des zuvor verschlüsselten und signierten Geheimschlüssels von dem Server zu dem Client;
d) Überprüfen der Signatur des verschlüsselten und signierten Geheimschlüssels unter Zuhilfenahme eines öffentlichen Schlüssels des Servers;
e) Falls die zuvor geprüfte Signatur gültig ist, Entschlüsseln des verschlüsselten Geheimschlüssels unter Zuhilfenahme eines Privatschlüssels des Clients durch den Client;
f) Ermitteln eines Hashwerts des Codes unter Zuhilfenahme einer Hashfunktion durch den Client;
g) Verschlüsseln des Hashwerts unter Zuhilfenahme des Geheimschlüssels und Signieren des verschlüsselten Hashwerts unter Zuhilfenahme des Privatschlüssels des Clients durch den Client;
h) Übertragen des verschlüsselten und signierten Hashwerts von dem Client zu dem Server;
i) Überprüfen der Signatur des verschlüsselten und signierten Hashwerts unter Zuhilfenahme eines öffentlichen Schlüssels des Clients durch den Server;
j) Falls die zuvor geprüfte Signatur gültig ist, Entschlüsselung des verschlüsselten Hashwerts unter Zuhilfenahme des Geheimschlüssels durch den Server;
k) Ermitteln eines zusätzlichen Hashwerts einer auf dem Server hinterlegten und nicht an den Client übertragenen Kopie des Codes durch den Server;
l) Für den Fall, dass der Hashwert und der zusätzliche Hashwert übereinstimmen, lässt der Server eine Kommunikation des Clients mit dem Leitsystem der technischen Anlage zu.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Diese Anlagen verfügen jeweils über ein Leitsystem oder zumindest ein computerunterstütztes Modul zur Steuerung und Regelung des ablaufenden Prozesses oder der Produktion. Unter einem Leitsystem wird im vorliegenden Kontext ein computergestütztes technisches System verstanden, das Funktionalitäten zum Darstellen, Bedienen und Leiten eines technischen Systems wie einer Fertigungs- oder Produktionsanlage umfasst. Das Leitsystem umfasst im vorliegenden Fall Sensoren zur Ermittlung von Messwerten sowie verschiedene Aktoren. Zudem umfasst das Leitsystem sogenannte prozess- oder fertigungsnahe Komponenten, die zur Ansteuerung der Aktoren bzw. Sensoren dienen. Darüber hinaus weist das Leitsystem u.a. Mittel zur Visualisierung der technischen Anlage und zu einem Engineering auf. Unter dem Begriff Leitsystem sind zusätzlich auch weitere Recheneinheiten für komplexere Regelungen und Systeme zur Datenspeicherung und -verarbeitung zu fassen.

Der Client kann ein herkömmlicher Computer, ein Smartphone, ein Tablet, ein Server oder dergleichen sein. In der Regel weist der Client eine Bildanzeigevorrichtung auf, mittels der ein Benutzer des Clients Informationen grafisch dargeboten bekommt. Um Informationen von dem Leitsystem der technischen Anlage zu erhalten, meldet sich der Client bei dem Sever an und erhält einen Code zur Ausführung.

Sowohl der Client als auch der Server verfügen über asymmetrische Schlüsselpaare, von denen jeweils einer ein öffentlicher Schlüssel (public key) und der andere ein Privatschlüssel (private key) ist. Die Privatschlüssel können hardwaregebunden sein (z.B. in einem sogenannten in die zugrundeliegende Hardware integrierten Hardware Secure Element, z.B. TPM (Trusted Platform Module) oder HSM (Hardware Security Module)). Bei geringen Sicherheitsanforderungen können die Privatschlüssel beispielsweise auch im Windows Key Store hinterlegt sein.

Die Bindung zwischen den beiden Schlüsseln eines Schlüsselpaares kann mittels eines von einer vertrauenswürdigen Certification Authority (CA) ausgestellten Zertifikats sichergestellt werden. Dies können beispielsweise die TLS-Zertifikate der beiden Partner (Client und Server) oder die an die zugrundeliegende Hardware gebundenen Herstellerzertifikate (Manufacturer Device Certificates) oder die in der Windows Active Directory oder einer Windows Work Group ausgestellten Windows-Zertifikate sein. Ebenfalls ist es möglich (falls die topologischen Randbedingungen der jeweiligen Einsatzumgebung dies zulassen), dass die Teilnehmer ihre Zertifikate bei der LetsEncrypt CA beantragt haben.

In der einfachsten Ausführung können die Zertifikate (ggf. samt den zugehörigen Schlüsseln) bei einem vertrauenswürdigen Anbieter käuflich erworben werden und im Certificate Store der Teilnehmer hinterlegt werden, wobei wie oben bereits erwähnt ein besonderes Augenmerk auf den Schutz der Private Keys (sowohl bei deren Ablage als bei der nur in einem Ausnahmefall zulässigen Übertragung) gelegt werden soll.

Durch den Austausch der Zertifikate im Rahmen eines sogenannten sicheren Handshake (z.B. TLS-Handshake) wird sichergestellt, dass jedem Teilnehmer der Public Key des jeweils anderen Teilnehmers vorliegt. Mit dem Public Key des anderen Teilnehmers können die für diesen bestimmten Nachrichten verschlüsselt oder seine Signatur validiert werden.

Unter einer Hashfunktion wird allgemeine eine Funktionsvorschrift verstanden, die eine größere Eingabemenge auf eine kleinere Zielmenge (einen Hashwert) abbildet.

Das erfindungsgemäße Verfahren ermöglicht es einem vertrauenswürdigen Client, den (Web-)Server davon zu überzeugen, dass der im Browser ausgeführte Code unverändert ist, ohne jedoch den Code im Klartext zum Webserver zu übertragen. Statt des Klartext-Codes werden auf eine sichere Art und Weise kryptographisch gebildete Werte übertragen. Außerdem wird sichergestellt, dass die o.g. kryptographischen Werte stets zu dem im Client ausgeführten Code gebildet werden.

Auch wenn der vom Server in den Client geladene Code über einen längeren Zeitraum unverändert bleibt, machen die vom Client zum Server zwecks der Prüfung übertragenen Werte für einen potentiellen Angreifer zufällig aus. Somit kann der Angreifer (auch wenn er mehrere Werte aufzeichnen sollte) keine nützlichen Rückschlüsse daraus ziehen, die ihm beim Versuch, trotz der Ausführung des manipulierten Codes einen korrekten Wert an den Server zu übermitteln, helfen könnten. Somit bleiben Manipulationen nicht unerkannt.

Durch eine Ausführung des oben beschriebenen, zur Ad-hoc Erkennung von Manipulationen eingesetzten Prüfverfahrens kann Sichergestellt werden, dass Manipulationsversuche ad-hoc erkannt werden und der im Client ausgeführte Code somit (von einem Virus oder einem Angreifer) nicht unbemerkt manipuliert werden kann. Dadurch kann auf besonders vorteilhafte Art und Weise ein fundierter Beitrag zur Aufrechterhaltung der Code-Integrität und der Integrität des Leitsystems der technischen Anlage geleistet werden.

Für den Fall, dass die Hashwerte nicht übereinstimmen, kann der Client von einer Kommunikation mit dem Leitsystem der technischen Anlage ausgeschlossen werden. Hierdurch kann verhindert werden, dass der Client einen falschen bzw. manipulierten Code ausführt und potentiell einen Schaden in dem Leitsystem der technischen Anlage bewirkt.

Bevorzugt lässt der Server den Client wieder für eine Kommunikation mit dem Leitsystem zu, wenn sich der Client nach dem Ausschluss von der Kommunikation mit dem Leitsystem erneut bei dem Server anmeldet und die zuvor erläuterte Integritätsprüfung dann eine Übereinstimmung der Hashwerte ergibt. Man spricht in diesem Fall von einer Rehabilitation des Clients. Der neu geladene Client kann von dem Server vorteilhafterweise auch den Grund in Erfahrung bringen, weshalb er von einer Kommunikation mit dem Leitsystem ausgeschlossen wurde.

Durch den zuvor beschriebenen, voll automatisierten Ablauf zur sofortigen Sanktionierung im Falle eines erkannten Manipulationsversuchs sowie zu Rehabilitation von Clients, sobald diese nicht mehr gefährdet sind und kein Security-Risiko mehr darstellen, kann zur Aufrechterhaltung des Betriebs und zur Verbesserung der Verfügbarkeit des technischen Systems beigetragen werden.

Bei einer vorteilhaften Weiterbildung der Erfindung schließt der Server den Client für den Fall, dass sich der Client nach dem Ausschluss von der Kommunikation mit dem Leitsystem erneut bei dem Server anmeldet und die Integritätsprüfung zum zweiten Mal keine Übereinstimmung der Hashwerte ergibt, von einer Kommunikation mit dem Leitsystem aus und hinterlegt den Client als abzulehnendes Gerät in dem Leitsystem. Der Client befindet sich dann auf einer sogenannten "Black List". Diese ist innerhalb des Leitsystems allen Teilnehmern, insbesondere Servern, zugänglich, so dass sich der Client auch auf keinem weiteren Server mehr anmelden kann. Es handelt sich dabei um eine volle Sanktionierung. Der Client kann nur noch durch einen Administrator des Leitsystems in einen Zustand versetzt werden, der ihn für eine Kommunikation mit dem Leitsystem wieder zulässt.

Die Aufgabe wird zudem gelöst durch eine Client-Server Architektur für ein Leitsystem einer technischen Anlage, wobei die Client-Server Architektur wenigstens ein als Client ausgebildetes und vorgesehenes erstes Gerät und wenigstens ein als Server ausgebildetes und vorgesehenes zweites Gerät umfasst, die dazu ausgebildet ist, ein Verfahren wie zuvor erläutert durchzuführen.

Außerdem wird die Aufgabe gelöst durch eine Client-Server Architektur für ein Leitsystem einer technischen Anlage,
wobei die Client-Server Architektur wenigstens ein als Client ausgebildetes und vorgesehenes erstes Gerät und wenigstens ein als dem Client zugeordneten Server ausgebildetes und vorgesehenes zweites Gerät umfasst,
und wobei der Client dazu ausgebildet ist, Kontakt mit dem Server aufzunehmen, einen Code von dem Server zu empfangen und auszuführen, wobei mittels des Servers eine Kommunikation des Clients zu dem Leitsystem besteht,
und wobei der Server dazu ausgebildet ist, zu erkennen, ob der Code, den der Client ausführt, mit dem Code übereinstimmt, den der Client von dem Server empfangen hat,
wobei der Server dazu ausgebildet ist, für den Fall, dass der Code nicht übereinstimmt, eine Ausführung des Codes durch den Client zu unterbrechen und den Client von einer Kommunikation mit dem Leitsystem auszuschließen.
Bevorzugt ist dabei der Server dazu ausgebildet, den Client als abzulehnendes Gerät in einem Leitsystem zu hinterlegen, wenn der Client nach dem Ausschluss von der Kommunikation mit dem Leitsystem erneut Kontakt mit dem Server aufgenommen hat und aufgrund des Ausführens eines nicht übereinstimmenden Codes ein zweites Mal von der Kommunikation mit dem Leitsystem ausgeschlossen worden ist.

Die oben formulierte Aufgabe wird zudem gelöst durch ein Leitsystem einer technischen Anlage mit einer Client-Server Architektur wie zuvor erläutert.

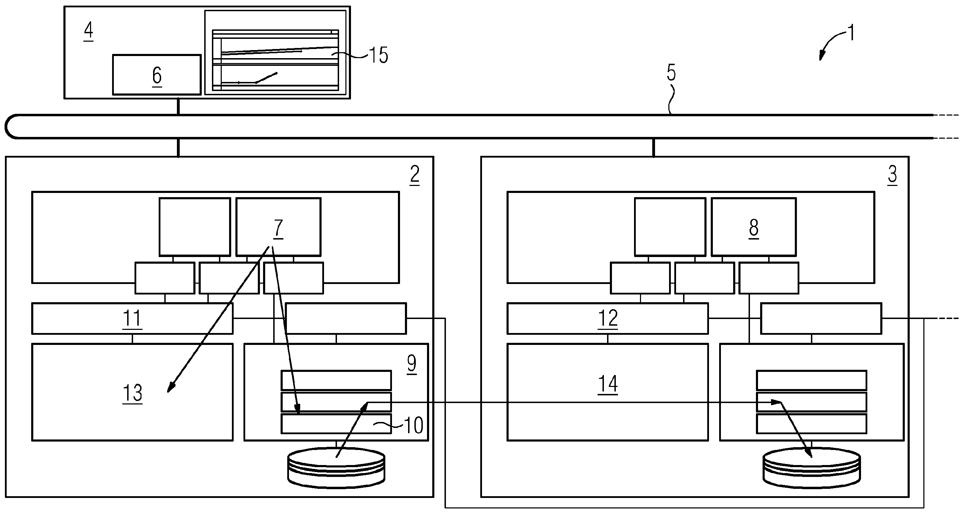

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit der Zeichnung näher erläutert wird.

In der Figur ist ein Teil eines erfindungsgemäßen Leitsystems 1 einer als verfahrenstechnische Anlage ausgebildeten technischen Anlage dargestellt. Das Leitsystem 1 umfasst einen ersten Server eines Bediensystems bzw. einen ersten Operator Station Server 2 und einen zweiten Operator Station Server 3. Zudem umfasst das Leitsystem 1 einen Operator Station Client 4. Der erste Operator Station Server 2, der zweite Operator Station Server 3 und der Operator Station Client 4 sind über einen Terminalbus 5 miteinander und mit nicht dargestellten weiteren Komponenten des Leitsystems 1 wie einem Engineering System Server oder einem Prozessdatenarchiv verbunden.

Ein Benutzer bzw. Operator kann mittels des Operator Station Clients 4 mittels des Terminalbus 5 im Kontext eines Bedienens und Beobachtens Zugriff auf den ersten Operator Station Server 2 und/oder den zweiten Operator Station Server 3 haben. Der Terminalbus 5 kann, ohne sich darauf zu beschränken, beispielsweise als Industrial Ethernet ausgebildet sein.

Der Operator Station Client 4 weist eine als "Local Client Observer" bezeichnete Komponente 6 auf. Der erste Operator Station Server 2 weist eine als "Client Oberserver" bezeichnete Komponente 7 auf. Der zweite Operator Station Server 3 weist ebenfalls eine als "Client Observer" bezeichnete Komponente 8 auf.

Die Komponenten "Local Client Observer" 6 und "Client Observer" 7, 8 verfügen über asymmetrische (Public Key) Schlüsselpaare, wobei mit "X" der jeweilige asymmetrische Geheimschlüssel (Private Key) und mit "Y" der jeweilige asymmetrische Öffentliche Schlüssel (Public Key) bezeichnet wird. Aus Security-Gründen sollten die zugehörigen Private Keys bestenfalls hardwaregebunden (d.h. in einem sog. in die zugrundeliegende Hardware integrierten Hardware Secure Element, z.B. TPM oder HSM) oder alternativ (bei geringeren Security-Anforderungen) beispielsweise im Windows Key Store oder in einem anderen Key Store sicher hinterlegt werden.

Der Client 4 meldet sich bei dem ersten Operator Station Server 2 an und lädt von diesem einen auszuführenden Code herunter. Die Komponente "Client Observer" 7 des ersten Operator Station Servers 6 stößt das Code-Prüfverfahren an, indem er (aus Security-Gründen möglichst unter Verwendung von Pseudozufallswerten) einen Geheimschlüssel generiert, diesen dann mit dem öffentlichen Schlüssel der Komponente "Local Client Observer" 6 verschlüsselt und das Ergebnis (Enc) mit seinem öffentlichen Schlüssel signiert (Sig). Das Ergebnis übermittelt die Komponente "Client Observer" 7 anschließend an die Komponente "Local Client Observer" 6.

Dabei sind die verwendeten Entschlüsselungs- und Signaturfunktionen Funktionen nach dem Stand der Technik. Die entsprechenden Funktionen zu "Enc" bzw. "Sig" werden im Folgenden als "Dec" bzw. "Ver" bezeichnet. Zu beachten ist, dass es zu jeder Verschlüsselungs- bzw. Signaturfunktion stets eine Entschlüsselungs- bzw. Signaturprüffunktion gibt. Der symmetrische Geheimschlüssel wird von der Komponente "Client Observer" 7 für jeden Prüfvorgang neu generiert.

Die Komponente "Local Client Observer" 6 empfängt von der Komponente "Client Observer" 7 des ersten Operator Station Servers 2 einen Wert, der aus dem Wert Enc und der zugehörigen Signatur Sig besteht. Zuerst prüft er unter Verwendung des öffentlichen Schlüssels des Operator Station Servers 2, ob die Signatur Sig(Enc) gültig ist: Ver(Sig(Enc) = True?

Für den Fall, dass die Signatur gültig ist, entschlüsselt er unter Verwendung seines Privatschlüssels den gemeinsamen symmetrischen Geheimschlüssel. Anschließend bildet er einen Hashwert zu dem von dem ersten Operator Station Server 2 empfangenen Code (hash=h(Code)), wobei eine Hashfunktion h verwendet wird. Dann verschlüsselt der Client 4 den Hashwert mit dem gemeinsamen symmetrischen Geheimschlüssel und signiert das Ergebnis mit seinem Privatschlüssel. Anschließend übermittelt er das Gesamtergebnis aus Verschlüsselung und Signatur an die Komponente "Client Observer" 7 des ersten Operator Station Servers 2. Es ist wichtig zu beachten, dass der übertragene Wert für einen Außenstehenden bzw. einen Angreifer zufällig aussieht. Wie bereits erwähnt, kann der Angreifer (auch wenn er mehrere Werte mitschneidet) keine nützlichen Rückschlüsse daraus ziehen, die ihm beim Versuch, trotz der Ausführung des manipulierten Codes einen korrekten Wert an den ersten Operator Station Server 2 zu übermitteln, helfen könnten.

Die Komponente "Client Observer" 7 des ersten Operator Station Servers 2 empfängt von der Komponente "Local Client Observer" 6 den verschlüsselten und signierten Hashwert des auszuführenden Codes. Zuerst prüft die Komponente "Client Observer" 7 unter Verwendung des öffentlichen Schlüssels des Clients 4, ob die Signatur gültig ist. Falls dies der Fall ist, entschlüsselt die Komponente "Client Observer" 6 unter Verwendung des gemeinsamen symmetrischen Geheimschlüssels den Hashwert. Anschließend prüft die Komponente "Client Observer" 6, ob das Ergebnis der Entschlüsselung mit dem zum korrekten, auf dem ersten Operator Station Server 2 hinterlegten Code gebildeten (und somit korrekten) Hashwert übereinstimmt.

Falls ja, ist das Prüfverfahren erfolgreich abgeschlossen, d.h. es wurde bestätigt, dass der vom ersten Operator Station Server 2 in den Client 4 geladenen Code nicht manipuliert wurde. Andernfalls (falls eine Manipulation erkannt wurde) wird der im Folgenden beschriebene Ablauf zur Sanktionierung und Rehabilitation ausgeführt.

Erkennt der erste Operator Station Server 2 eine Manipulation, bricht er unmittelbar das aktuell ausgeführte Kommando (z.B. Stellwertänderung, Alarmquittierung...) usw. ab. Weiterhin beendet er die aktuelle Client-Session, d.h. er schließt den Client 4 zumindest temporär von einer Kommunikation mit dem Leitsystem 1 aus. Der erste Operator Station Server 2 setzt eine entsprechendes Event bzw. eine entsprechende Sicherheitsmeldung ab, welche den Rest des Leitsystems 1 über einen möglicherweise manipulierten Client 4 unterrichtet. Weiterhin wird in einer als "User Profile Service" bezeichneten Komponente 9 eine "Client Blacklist" 10 um den betroffenen Client 4 ergänzt. Dabei handelt es sich zunächst um einen Vermerk, noch nicht über eine tatsächliche Sperre.

Über eine als "Mirroring" bezeichnete Komponente 11 des ersten Operator Station Servers 2 werden weitere Operator Station Server 3 in denselben Kenntnisstand versetzt. Egal an welchem Operator Station Server 2, 3 sich der Client 4 wieder anmeldet - es ist dem Leitsystem 1 bekannt, dass dieser wegen einer Manipulation zunächst "rehabilitiert" wird - sozusagen auf Bewährung ist - und noch nicht gänzlich von der Bedienung und Beobachtung ausgeschlossen ist.

Bei der Neuverbindung des Clients 4 mit einem Operator Station Server 2, 3 wird der potenziell manipulierte Code im Client 4 vom jeweiligen Operator Station Server 2, 3 neu geladen. In weiteren Prüfungen durch die jeweilige Komponente "Client Observer" 7, 8 wird nun evaluiert, ob der Client 4 rehabilitiert ist. Falls dies zutrifft, kann dieser aus der Blacklist verworfen werden. Falls dies nicht zutrifft, bleibt der Client 4 entsprechend gesperrt.

Durch eine in dem ersten bzw. zweiten Operator Station Server 2, 3 integrierte Komponente "Event Manager" 11 ,12 (alle im Rahmen der beschriebenen Abläufe erfassten Events werden grundsätzlich archiviert) kann unabhängig davon eine historische bzw. forensische Analyse (Audit Trail) vorgenommen werden, welche Clients 4 in der Vergangenheit potentiell manipuliert waren, obgleich sie zwischenzeitlich rehabilitiert wurden. Die Events bzw. Sicherheitsmeldungen sind über ein jeweiliges Prozessabbild 13, 14 des ersten bzw. zweiten Operator Station Servers 2, 3 einer Meldefolgeanzeige 15 des Clients 4 zugänglich.

Durch die in den Prozessabbildern hinterlegten Sicherheitsmeldungen der Laufzeitumgebungen haben alle Operatoren der Bedienung und Beobachtung der verfahrenstechnischen Anlage Kenntnis von problematischen Clients 4, was für den Betrieb der Anlage eine wichtige Information darstellt. Durch die kontinuierliche Überwachung der Code-Prüfung, die Generierung der entsprechenden Events (falls eine Manipulation erkannt wurde) sowie durch die Initiierung der sofortigen Reaktion darauf (in Form einer Sanktionierung) wird zur Konformität mit den entsprechenden Anforderungen der IEC 62443 als des führenden Industrial Security Standards bzgl. des kontinuierlichen Security-Monitorings (engl. "Continuous monitoring") und der sofortigen Reaktion auf gemeldete Events und Alarme (engl. "Timely response to events") beigetragen.

Da die Verfügbarkeit und Integrität die wichtigsten Anforderungen der IEC 62443 darstellen, wird durch die vorliegende Erfindung generell zur Konformität mit der IEC 62443 sowie mit den darauf basierenden Anforderungen im Rahmen der entsprechenden (zunehmend verpflichtenden) Zertifizierungen und Audits beigetragen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Integritätsprüfung bei einer Client-Server Architektur eines Leitsystems (1) einer technischen Anlage, wobei die Client-Server Architektur wenigstens ein als Client (4) ausgebildetes und vorgesehenes erstes Gerät und wenigstens ein als Server (2, 3) ausgebildetes und vorgesehenes zweites Gerät umfasst, das Verfahren umfassend:
a) Anmeldung des Clients (4) bei dem Server (2, 3) und Herunterladen eines von dem Client (4) auszuführenden Codes von dem Server;
b) Generieren eines Geheimschlüssels, Verschlüsseln des Geheimschlüssels unter Zuhilfenahme eines öffentlichen Schlüssels des Clients (4) und Erstellung einer Signatur für den verschlüsselten Geheimschlüssel unter Zuhilfenahme eines öffentlichen Schlüssels des Servers durch den Server (2, 3);
c) Übertragen des zuvor verschlüsselten und signierten Geheimschlüssels von dem Server (2, 3) zu dem Client (4);
d) Überprüfen der Signatur des verschlüsselten und signierten Geheimschlüssels unter Zuhilfenahme eines öffentlichen Schlüssels des Servers (2, 3);
e) Falls die zuvor geprüfte Signatur gültig ist, Entschlüsseln des verschlüsselten Geheimschlüssels unter Zuhilfenahme eines Privatschlüssels des Clients (4) durch den Client (4);
f) Ermitteln eines Hashwerts des Codes unter Zuhilfenahme einer Hashfunktion durch den Client (4);
g) Verschlüsseln des Hashwerts unter Zuhilfenahme des Geheimschlüssels und Signieren des verschlüsselten Hashwerts unter Zuhilfenahme des Privatschlüssels des Clients (4) durch den Client (4);
h) Übertragen des verschlüsselten und signierten Hashwerts von dem Client (4) zu dem Server (2, 3);
i) Überprüfen der Signatur des verschlüsselten und signierten Hashwerts unter Zuhilfenahme eines öffentlichen Schlüssels des Clients (4) durch den Server (2, 3);
j) Falls die zuvor geprüfte Signatur gültig ist, Entschlüsselung des verschlüsselten Hashwerts unter Zuhilfenahme des Geheimschlüssels durch den Server (2, 3);
k) Ermitteln eines zusätzlichen Hashwerts einer auf dem Server (2, 3) hinterlegten und nicht an den Client (4) übertragenen Kopie des Codes durch den Server (2, 3);
l) Für den Fall, dass der Hashwert und der zusätzliche Hashwert übereinstimmen, lässt der Server (2, 3) eine Kommunikation des Clients (4) mit dem Leitsystem der technischen Anlage zu.

2. Verfahren nach Anspruch 1, bei dem für den Fall, dass die Hashwerte nicht übereinstimmen, der Client (4) von einer Kommunikation mit dem Leitsystem (1) ausgeschlossen wird.

3. Verfahren nach Anspruch 2, bei dem für den Fall, dass sich der Client (4) nach dem Ausschluss von der Kommunikation mit dem Leitsystem (1) erneut bei dem Server (2, 3) anmeldet und die Integritätsprüfung gemäß Anspruch 1 eine Übereinstimmung der Hashwerte ergibt, der Server (2, 3) den Client (4) wieder für eine Kommunikation mit dem Leitsystem (1) zulässt.

4. Verfahren nach Anspruch 2, bei dem für den Fall, dass sich der Client (4) nach dem Ausschluss von der Kommunikation mit dem Leitsystem (1) erneut bei dem Server (2, 3) anmeldet und die Integritätsprüfung gemäß Anspruch 1 keine Übereinstimmung der Hashwerte ergibt, der Server den Client (4) dauerhaft von einer Kommunikation mit dem Leitsystem (1) ausschließt und den Client (4) als abzulehnendes Gerät in dem Leitsystem (1) hinterlegt.

5. Client-Server Architektur für ein Leitsystem (1) einer technischen Anlage, wobei die Client-Server Architektur wenigstens ein als Client (4) ausgebildetes und vorgesehenes erstes Gerät und wenigstens ein als Server (2, 3) ausgebildetes und vorgesehenes zweites Gerät umfasst, die dazu ausgebildet ist, ein Verfahren gemäß einem der vorangegangenen Ansprüche durchzuführen.

6. Client-Server Architektur für ein Leitsystem (1) einer technischen Anlage,
wobei die Client-Server Architektur wenigstens ein als Client (4) ausgebildetes und vorgesehenes erstes Gerät und wenigstens ein als dem Client (4) zugeordneten Server (2, 3) ausgebildetes und vorgesehenes zweites Gerät umfasst,
und wobei der Client (4) dazu ausgebildet ist, Kontakt mit dem Server (2, 3) aufzunehmen, einen Code von dem Server (2, 3) zu empfangen und auszuführen, wobei mittels des Servers (2, 3) eine Kommunikation des Clients (4) zu dem Leitsystem (1) besteht,
und wobei der Server (2, 3) dazu ausgebildet ist, zu erkennen, ob der Code, den der Client (4) ausführt, mit dem Code übereinstimmt, den der Client (4) von dem Server (2, 3) empfangen hat,
wobei der Server (2, 3) dazu ausgebildet ist, für den Fall, dass der Code nicht übereinstimmt, eine Ausführung des Codes durch den Client (4) zu unterbrechen und den Client (4) von einer Kommunikation mit dem Leitsystem (1) auszuschließen.

7. Client-Server Architektur gemäß Anspruch 6, bei der für den Fall, dass der Client (4) nach dem Ausschluss von der Kommunikation mit dem Leitsystem (1) erneut Kontakt mit dem Server (2, 3) aufgenommen hat und aufgrund des Ausführens eines nicht übereinstimmenden Codes ein zweites Mal von der Kommunikation mit dem Leitsystem (1) ausgeschlossen worden ist, der Server (2, 3) dazu ausgebildet ist, den Client (4) als abzulehnendes Gerät in dem Leitsystem (1) zu hinterlegen.

8. Leitsystem (1) einer technischen Anlage mit einer Client-Server Architektur gemäß einem der Ansprüche 5 bis 7.
